# EUROPEAN PATENT APPLICATION

(11) **EP 0 987 170 A2**
(43) Date of publication of application: **22.03.2000**
(21) Application number: 99202838.1
(22) Date of filing: 03.09.1999
(51) Int. Cl.: B62D 53/06

(54) **Vehicle for exchange traffic, assembly of loading units and a loading unit for such a vehicle and assembly, respectively**

(30) Priority: 08.09.1998 NL 1010032
(71) Applicant: Blaauw, Arthur Martin, 5552 HK Valkenswaard (NL)
(72) Inventor: Blaauw, Arthur Martin, 5552 HK Valkenswaard (NL)
(74) Representative: Seerden, Adrianus Maria

(57) **Abstract**

Vehicle (1) in particular suitable for exchange traffic, comprising a hauling motor vehicle (2) with a carrier part (3), on which a first exchange container (4) as first loading unit is removably carried. The vehicle further comprises a trailer (5) hauled by the hauling motor vehicle (2) containing a second loading unit, preferably a second exchange container (6) removably carried on the trailer (5). The vehicle is provided with means for shifting the first exchange container (4) and the second loading unit/exchange container (6) with respect to each other. The first exchange container (4) and the second loading unit/second exchange container (6) are provided with coupling means (7',8') for the coupling to each other into one common loading unit. Assembly of a first exchange container (4) and a second exchange container/loading unit (6), in which the first exchange container (4) and second exchange container/loading unit (6) are provided with coupling means (7',8') for the coupling to each other into one common loading unit. Exchange container and trailer with loading unit, respectively, suitable for use in such a vehicle and suitable for use in such an assembly, respectively, in which the exchange container/the loading unit is provided with coupling means for the coupling to another exchange container and the loading unit, respectively.

## Description

The present invention relates to a vehicle for exchange traffic.

In exchange traffic one or more exchange containers or an exchange semitrailer are transported by road by vehicles or assemblies of vehicles, including for instance a motorized hauling vehicle. Said exchange containers or semitrailers can be removed from or from behind said vehicles, and be placed on or behind another vehicle, such as another vehicle with a motorized hauling vehicle, a train or a ship. These are cases of combined traffic, such as combined road/rail traffic or road/water, including the so-called Ro-Ro traffic.

It is amongst others an object of the present invention to provide an alternative vehicle concept for exchange traffic, which ensures lower processing costs and shorter exchange times, resulting in a cost reduction.

To that end the present invention provides a vehicle for exchange traffic, comprising a motorized hauling vehicle with a carrier part, a first exchange container carried removably on the carrier part as first loading unit, a trailer hauled by the hauling motor vehicle containing a second loading unit, in which the vehicle is provided with means for shifting the first exchange container and the second loading unit with respect to each other, in which the first exchange container and the second loading unit are provided with coupling means for coupling the exchange container and the second loading unit to each other into one common loading unit. Because the first and second loading unit can be coupled to each other into one common loading unit, either the exchanging or transferring or shunting of said one loading unit can take place more rapidly than the exchange, transfer or shunt of two separate loading units. An additional advantage being that the common loading unit is also suitable for transporting long cargo and has a larger loading capacity than two loading units which, as to length, are similar.

It is noted here that the concept trailer also comprises a semitrailer. The second loading unit can be a second exchange container or a trailer provided with a non-removable superstructure.

Preferred embodiments of a vehicle according to the present invention are described in the sub claims.

The present invention furthermore relates to an assembly of a first exchange container as first loading unit and a second exchange container as second loading unit, in which the first and second exchange container are provided with coupling means for coupling the exchange containers to each other into one common loading unit.

The present invention also relates to a loading unit suitable for use in a vehicle according to the invention and suitable for use in an assembly according to the invention, respectively, in which the loading unit is provided with coupling means for coupling to another loading unit.

Some embodiments of the invention will be elucidated by way of example on the basis of the drawings, in which:
Figure 1 shows a schematic view of a known vehicle for exchange traffic;
Figure 2 schematically shows an exemplary embodiment of a vehicle for exchange traffic according to the present invention; and
Figure 3A and 3B schematically show a first exchange container and a second loading unit according to the invention in uncoupled and coupled situation, respectively.

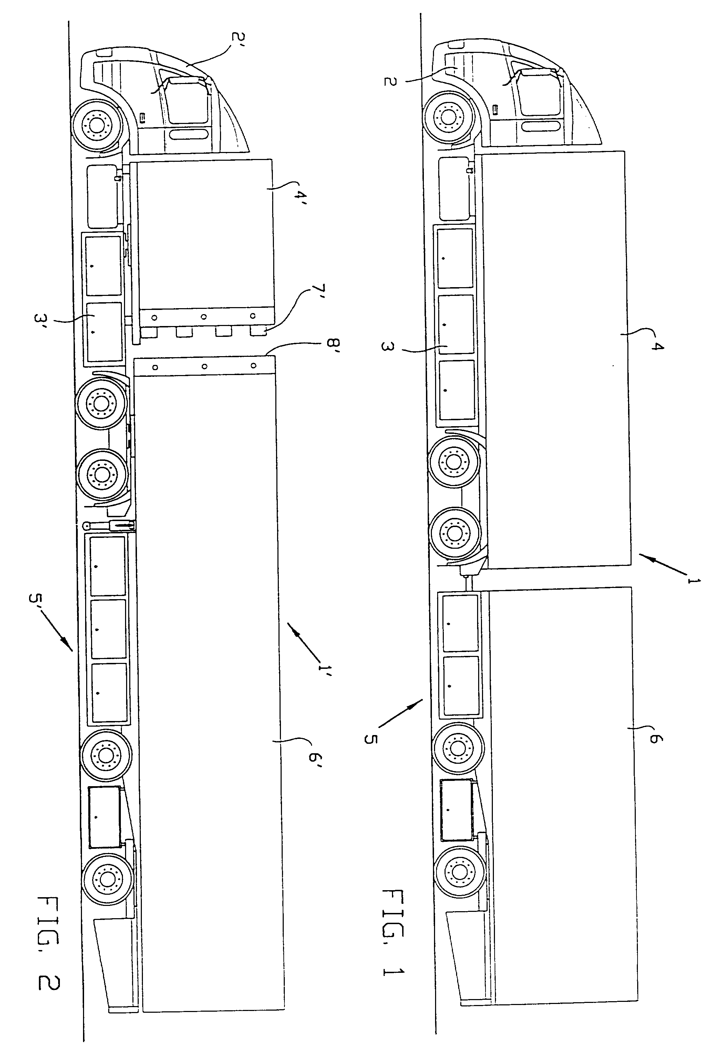

In figure 1 a schematic view is shown of an embodiment of a known vehicle 1 for the transport of exchange containers. This vehicle 1 comprises a hauling motor vehicle 2 with a carrier part 3. On this carrier part 3 a first exchange container 4 is carried removably. Furthermore said known vehicle 1 comprises a trailer 5 hauled by the hauling motor vehicle 2, which trailer contains a second exchange container 6. In exchange traffic these exchange containers 4 and 6 are removed separately from the vehicle assembly, and are placed on another vehicle or stored temporarily. Such a separate removal and placement takes a lot of time and therefore entails relatively high costs.

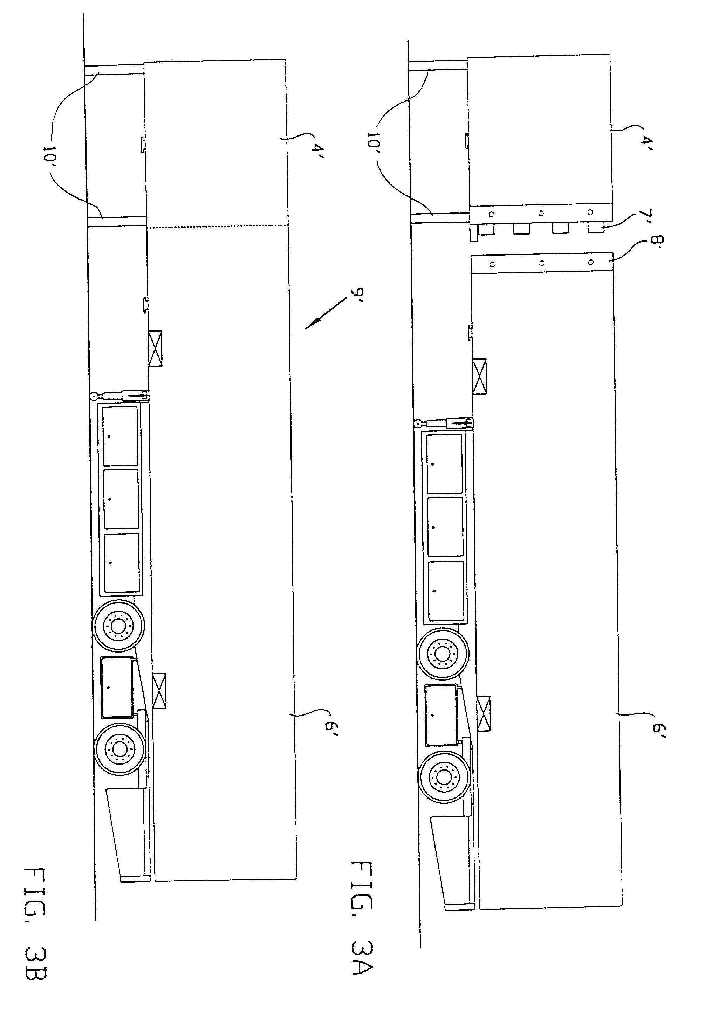

According to the present invention the time for exchanging the exchange containers is considerably reduced by providing a vehicle 1' (figure 2) for exchange traffic, in which the first exchange container 4' as first loading unit and the trailer with a non-exchangeable superstructure as second loading unit 6' are provided with coupling means 7' and 8', respectively, for coupling the loading units 4' and 6' to each other into one common loading unit. Although the invention will be described on the basis of the coupling of an exchange container as first loading unit to a trailer with a non-exchangeable superstructure as second loading unit, it will be clear that the invention also relates to the coupling of for instance two exchange containers.

In figure 3A and 3B the uncoupled situation and the situation in which the first loading unit, the exchange container 4' and the second loading unit 6' are coupled into a common loading unit 9', respectively, are shown. By coupling the loading units into one common loading unit 9', only one exchange action is necessary to place the common loading unit on another vehicle, which takes place considerably quicker than the exchange of the two separate loading units. Here the first exchange container 4' has to be arranged on the carrier part 3' of the vehicle 1' in a shiftable manner, in order to be able to couple the first exchange container 4' already present on the vehicle 1' to the second loading unit 6'. This can for instance be effected by providing a shiftable coupling dish or trailer coupling on the carrier part of the hauling vehicle, or by a shiftable pole on the trailer with as additional function shifting the trailer to the fore to such an extent that either the trailer or the second exchange container carried by it can be coupled to the first exchange container. Although less preferred, alternatively or additionally the second exchange container can be arranged on the trailer in a shiftable manner. Means for shiftably placing an exchange container on a carrier part, or either shiftable semitrailer or trailer couplings are known to the expert, so that a further description thereof can be left out.

Not only does the present vehicle 1' allow for shorter exchange times, during the coupling of the loading units moreover a common loading unit with a higher loading capacity is provided (up to a maximum of 39 so-called Euro pallets), which is also able to transport long cargoes. This for instance results in a strong reduction in road use. The separate vehicle parts remain to be used for other, already known, transport purposes.

In the example shown, the second loading unit 6' is permanently attached to the trailer 5', so that when it is removed from the hauling motor vehicle it is always provided with supporting means, in this case the wheels of the trailer 5'. For the removal of the first loading unit, the first exchange container 4' of the hauling motor vehicle 2' for for instance temporary storage, supporting means 10' are preferably placed under the first exchange container 4'. Preferably said supporting means 10' are integrated with the first exchange container 4'. When the second loading unit is a second exchange container, which is detachably attached to the trailer and preferably is provided with supporting means in an integrated manner, then after coupling the first exchange container to the second exchange container into one common loading unit, said common loading unit can be removed in its entirety from the vehicle, and for instance be lifted (craned) into or onto a ship or train.

Although the first and the second loading unit each have a different or possibly even the same length, because of the diversity of the use of the vehicle, it is preferred that the first loading unit (exchange container) 4' has a smaller length than the second loading unit (exchange container) 6'. For various constructive and logistic reasons, the first loading unit 4' preferably has a length situated between approximately 2.05 metres and approximately 3.25 metres and the second loading unit 6' has a length situated between approximately 13.60 metres and approximately 12.40 metres. It goes without saying that other vehicles such as railway wagons, for transporting the single common loading unit formed by two coupled loading units, have to have a suitable length in order to be able to transport it in its entirety. Such railway wagons already exist. This was explicitly taken into account during the designing of the vehicle 1'.

The present invention furthermore relates to an assembly of a first loading unit (exchange container) 4' and a second (loading unit) exchange container 6', in which the first 4' and the second 6' loading unit (exchange container) are provided with coupling means 7' and 8', respectively, for coupling the loading units (exchange containers) 4' and 6' to each other into one common loading unit 9'. Preferably the first loading unit (exchange container) 4' has a smaller length than the second loading unit (exchange container) 6', in particular the length of the first loading unit (exchange container) 4' is situated between approximately 2.05 metres and approximately 3.25 metres and the length of the second loading unit (exchange container) 6' is situated between approximately 13.60 metres and approximately 12.40 metres.

Furthermore the present invention relates to an exchange container (loading unit) suitable for use in connection with a vehicle according to the present invention and suitable for use in connection with an assembly according to the present invention, respectively, in which the exchange container (loading unit) 4', 6', is provided with coupling means 7' and 8', respectively, for coupling to another exchange container (loading unit) 6', 4' respectively. Preferably the exchange container (loading unit) has a length situated between approximately 2.05 metres and approximately 3.25 metres and approximately 13.60 metres and approximately 12.40 metres, respectively.

In the description given above the exact design of the coupling means for the coupling of the one exchange container (loading unit) to the other exchange container (loading unit) is not thoroughly gone into, as numerous coupling means are available to the expert which can all be considered as equivalents. The invention therefore is not limited to a specific design of coupling means, but in essence relates to exchange container which can be coupled and other loading units such as trailers including semitrailers, irrespective of the exact design of the coupling means.

## Claims

1. Vehicle for exchange traffic, comprising a motorized hauling vehicle with a carrier part, a first exchange container carried removably on the carrier part as first loading unit, a trailer hauled by the hauling motor vehicle containing a second loading unit, in which the vehicle is provided with means for shifting the first exchange container and the second loading unit with respect to each other, in which the first exchange container and the second loading unit are provided with coupling means for coupling the exchange container and the second loading unit to each other into one common loading unit.

2. Vehicle according to claim 1, in which the trailer and the second loading unit form one unity.

3. Vehicle according to claim 1, in which the second loading unit is a second exchange container which is removably carried by the trailer.

4. Vehicle according to claim 1, 2 or 3, in which means for shifting the first exchange container and the second loading unit with respect to each other are formed by means for shifting the first exchange container, said means being provided on the carrier part.

5. Vehicle according to claim 1, 2, 3 or 4, in which means for shifting the first exchange container and the second loading unit with respect to each other are formed by means for shifting the trailer and the second loading unit.

6. Vehicle according to claim 3, in which the means for shifting the first exchange container and the second loading unit with respect to each other are formed by means for the shifting of the second loading unit with respect to the trailer, said means being provided on the trailer.

7. Vehicle according to any one of the preceding claims, in which the first exchange container has a smaller length than the second loading unit.

8. Vehicle according to claim 3 or 6, in which the second exchange container is detachably attached to the trailer.

9. Vehicle according to claim 2 or 3, in which the length of the first exchange container is situated between approximately 2.05 metres and approximately 3.25 metres and the length of the second loading unit is situated between approximately 13.60 metres and approximately 12.40 metres.

10. Assembly of a first exchange container as first loading unit and a second exchange container as second loading unit, in which the first and second exchange container are provided with coupling means for coupling the exchange containers to each other into one common loading unit.

11. Assembly of a first exchange container as first loading unit and a trailer with second loading unit, in which the first exchange container and the second loading unit are provided with coupling means for coupling the first exchange container and the second loading unit to each other into one common loading unit.

12. Assembly according to claim 10 or 11, in which the first exchange container has a smaller length than the second exchange container and the second loading unit, respectively.

13. Assembly according to claim 12, in which the length of the first exchange container is situated between approximately 2.05 metres and approximately 3.25 metres and the length of the second exchange container and the second loading unit, respectively, is situated between approximately 13.60 metres and approximately 12.40 metres.

14. Loading unit suitable for use in a vehicle according to any one of the claims 1 to 9, respectively suitable for use in an assembly according to any one of the claims 10 to 13, in which the loading unit is provided with coupling means for coupling to another loading unit.

15. Loading unit according to claim 14, in which the loading unit has a length situated between approximately 2.05 metres and approximately 3.25 metres.

16. Loading unit according to claim 14, in which the loading unit has a length situated between approximately 13.60 metres and approximately 12.40 metres.
